# EUROPÄISCHE PATENTANMELDUNG

(11) **EP 2 571 085 A1**
(43) Veröffentlichungstag der Anmeldung: **20.03.2013**
(21) Anmeldenummer: 11181641.9
(22) Anmeldetag: 16.09.2011
(51) Int. Cl.: H01M 8/02, H01M 8/04

(54) **Elektrochemische Zelle**

(71) Anmelder: Siemens Aktiengesellschaft, 80333 München (DE)
(72) Erfinder: Berndt, Anett, 91058 Erlangen (DE); Brandt, Torsten, 91301 Forchheim (DE); Bärnreuther, Frank, 90419 Nürnberg (DE); Datz, Armin, Dr., 91099 Poxdorf (DE); Eder, Florian, Dr., 91052 Erlangen (DE); Hartnack, Herbert, 91056 Erlangen (DE); Hoffmann, Joachim, Dr., 90559 Burgthann (DE)

(57) **Zusammenfassung**

Die Erfindung betrifft eine elektrochemische Zelle (1) mit mindestens einem mit einer Kühlflüssigkeit (5), wie Wasser, kühlbaren Plattenelement (2) mit einer Oberfläche (3) des Plattenelements (2), welche zum Zweck der Kühlung mit dieser Kühlflüssigkeit (5) benetzbar ist, sowie ein Verfahren zur Herstellung einer elektrochemischen Zelle (1).

Bei der elektrochemischen Zelle (1) ist vorgesehen, dass die Oberfläche (3) des Plattenelements (2) derart ausgebildet ist, dass ein Kontaktwinkel zwischen der Oberfläche (3) und dieser Kühlflüssigkeit (5) kleiner als 90° ist.

Das Verfahren zur Herstellung der elektrochemischen Zelle (1) sieht vor, dass ein zusätzlicher, die zur Kühlung mit Kühlflüssigkeit (5) benetzbaren Oberflächen (3) von Plattenelementen (2) beeinflussender Verfahrensschritt (100) durchgeführt wird, durch welchen ein Kontaktwinkel zwischen der Oberfläche (3) und der Kühlflüssigkeit (5) verkleinert wird.

## Beschreibung

Die Erfindung betrifft eine elektrochemische Zelle mit mindestens einem mit Kühlflüssigkeit kühlbaren Plattenelement mit einer Oberfläche des Plattenelements, welche zum Zweck der Kühlung mit der Kühlflüssigkeit benetzbar ist, sowie ein Verfahren zur Herstellung einer elektrochemischen Zelle.

Elektrochemische Zellen sind allgemein bekannt, beispielsweise aus http://de.wikipedia.org/wiki/Elektrochemische_Zelle (15.09.2011), und werden unterteilt in galvanische Zellen und Elektrolysezellen.

Eine Elektrolysezelle ist eine Vorrichtung, bei der ein elektrischer Strom eine chemische Reaktion erzwingt, wobei zumindest ein Teil von elektrischer Energie in chemische Energie umgewandelt wird.

Eine galvanische Zelle ist eine - zur Elektrolysezelle komplementäre - Vorrichtung zur spontanen Umwandlung von chemischer in elektrische Energie. Eine bekannte Vorrichtung einer solchen galvanischen Zelle ist eine Brennstoffzelle, beispielsweise eine PEM-Brennstoffzelle (Proton Exchange Membran - Brennstoffzelle oder Polymer Elektrolyt Membran - Brennstoffzelle) (http://de.wikipedia.org/wiki/Brennstoffzelle, 15.09.2011).

In einer Wasserstoff-Sauerstoff-Brennstoffzelle reagieren Wasserstoff (H2) und Sauerstoff (02) (Betriebsgase) an einem Elektrolyten unter Abgabe von Wärme zu elektrischer Energie und Produktwasser, das - zusammen mit auskondensiertem Befeuchtungswasser - aus der Brennstoffzelle ausgetragen werden muss. Dies geschieht beispielsweise durch Ausblasen des Wassers mit überschüssigem Betriebsgas aus der Brennstoffzelle. Eine aktive Membran und die sie umgebenden Elektroden, d.h. einerseits eine Anode (wasserstoffseitig) und andererseits eine Kathode (sauerstoffseitig), (Membran-Elektroden-Einheit, ME) einer PEM-Brennstoffzelle müssen sowohl auf der Anodenseite als auch auf der Kathodenseite gleichmäßig mit den Betriebsgasen, Wasserstoff (H2) und Sauerstoff (02), versorgt werden, um eine über die gesamte aktive Fläche möglichst gleichmäßige Zellaktivität zu erhalten.

Dazu werden - bei einem mehrere solcher Membran-Elektroden-Einheiten aufweisenden, entsprechend geschichtetem Aufbau einer solchen Brennstoffzelle - zwischen den aktiven Membranen jeweils Plattenelemente bzw. Bipolarplatten angeordnet, deren jeweilige Oberfläche als Anode bzw. als Kathode wirkt und welche - an ihren Oberflächen, d.h. anodenseitig/wasserstoffseitig bzw. kathodenseitig/sauerstoffseitig, mit die Versorgung mit den Betriebsgasen bewirkenden Kanalstrukturen versehen sind.

Ein solches Plattenelement bzw. eine solche Bipolarplatte kann dabei an ihren Oberflächen auch eine elektrisch leitende Beschichtung, beispielsweise eine dünne Goldschicht, aufweisen.

Die bei der Reaktion von Wasserstoff (H2) und Sauerstoff (02) in der Brennstoffzelle entstehende Wärme erfordert eine Kühlung der Brennstoffzelle, um Schädigungen an der Brennstoffzelle, insbesondere Schädigungen an der aktiven Membran, zu verhindern. Zur Kühlung wird deshalb die Brennstoffzelle mit Kühlflüssigkeit, beispielsweise Wasser, versorgt bzw. gespült, wodurch Wärme aus der Brennstoffzelle abgeführt werden kann.

Dazu können die Plattenelemente bzw. die Bipolarplatten Kühlkanäle, beispielsweise Bohrungen, Kühlkanäle u.ä., aufweisen, durch welche die Kühlflüssigkeit strömt und dadurch Wärme aus der Brennstoffzelle abführt wird.

Es ist auch bekannt, eine Benetzbarkeit einer Oberfläche eines Festkörpers durch eine Flüssigkeit durch einen Kontaktwinkel zu beschreiben. Dabei werden ein statischer Kontaktwinkel und ein dynamischer Kontaktwinkel unterschieden, wobei bei dem dynamischen Kontaktwinkel weiter ein Rückzugswinkel und ein Fortschreitewinkel unterschieden werden.

Eine vollständige Benetzung bzw. Benetzbarkeit liegt vor bei einem Kontaktwinkel von 0°, d.h. die Flüssigkeit spreitet vollständig auf der Feststoffoberfläche. Völlige Nicht-Benetzung bzw. Nicht-Benetzbarkeit liegt vor bei einem Kontaktwinkel von 180°, d.h. die Flüssigkeit perlt vollständig von der Feststoffoberfläche ab. Zwischen diesen beiden Zuständen, völlige Benetzbarkeit bei Kontaktwinkeln von 0° und völlige Nicht-Bentzbarkeit bei Kontaktwinkeln von 180°, variiert ein Grad der Benetzbarkeit.

Verfahren zur Messung eines Kontaktwinkels, beispielsweise eine Plattenmethode nach Neumann, eine Wilhelmy-PlattenMethode oder eine Tropfenmethode, sind ebenfalls bekannt.

Es ist eine Aufgabe der vorliegenden Erfindung, eine elektrochemische Zelle, beispielsweise eine galvanische Zelle oder eine Elektrolysezelle, insbesondere eine Brennstoffzelle, anzugeben, bei welcher in der Zelle entstehende Wärme gut abgeführt werden und bei welcher eine gute Kühlung der Zelle erreicht werden kann.

Diese Aufgabe wird durch eine elektrochemische Zelle sowie durch ein Verfahren zur Herstellung einer chemischen Zelle gemäß dem jeweiligen unabhängigen Anspruch gelöst.

Die erfindungsgemäße elektrochemische Zelle weist mindestens ein mit einer Kühlflüssigkeit, insbesondere Wasser, beispielsweise Deionat, kühlbares Plattenelement mit einer Oberfläche des Plattenelements, welche zum Zweck der Kühlung mit dieser Kühlflüssigkeit benetzbar ist, auf.

Erfindungsgemäß ist weiter vorgesehen, dass die Oberfläche des Plattenelements derart ausgebildet ist, dass ein Kontaktwinkel zwischen der Oberfläche und dieser die Oberfläche benetzenden Kühlflüssigkeit kleiner als 90° ist.

Anders ausgedrückt, die Plattenelementoberfläche ist derart ausgebildet, dass der Kontaktwinkel der Oberfläche und der jeweiligen zur Kühlung verwendeten Kühlflüssigkeit kleiner als 90° ist.

Dabei kann der Kontaktwinkel - gemäß bekannter physikalischer und üblicher allgemeiner Definition - ein statischer oder dynamischer Kontaktwinkel, insbesondere - im Falle eines dynamischen Kontaktwinkels - ein Rückzugswinkel oder ein Fortschreitewinkel, sein.

Bei dem erfindungsgemäßen Verfahren zur Herstellung einer elektrochemischen Zelle mit mehreren durch Kühlflüssigkeit kühlbaren Plattenelementen, welche jeweils eine Oberfläche aufweisen, die zur Kühlung des jeweiligen Plattenelements mit der Kühlflüssigkeit benetztbar ist, werden zunächst die Plattenelemente hergestellt.

Dieses kann insbesondere dadurch geschehen, dass die Plattenelemente bildenden (Doppel-)Bleche bearbeitet werden, beispielsweise durch Umformen von den Blechen, insbesondere Tiefziehen und/oder Prägen, und Beschichten der Bleche mit einer elektrisch leitfähigen Schicht, insbesondere einer Edelmetallschicht, wie einer Goldschicht.

Die hergestellten Plattenelemente werden - abwechselnd mit Membranen - zu Membran-Elektroden-Einheiten geschichtet, wodurch ein geschichteter Aufbau der elektrochemischen Zelle hergestellt wird.

Erfindungsgemäß ist darüber hinaus vorgesehen, dass ein zusätzlicher, die zur Kühlung benetzbaren Oberflächen der Plattenelemente beeinflussender Verfahrensschritt durchgeführt wird, durch welchen ein Kontaktwinkel zwischen der Oberfläche und der Kühlflüssigkeit verkleinert wird.

Insbesondere wird durch diesen erfindungsgemäß vorgesehenen zusätzlichen, die zur Kühlung benetzbaren Oberflächen der Plattenelemente beeinflussenden Verfahrensschritt erreicht, dass ein Kontaktwinkel zwischen der Oberfläche und der die Oberfläche benetzenden Kühlflüssigkeit, beispielsweise Wasser, insbesondere Deionat, kleiner als 90° ist.

Dabei soll bei der Erfindung unter "diesem zusätzlichen, die zur Kühlung benetzbaren Oberflächen der Plattenelemente beeinflussender Verfahrensschritt" verstanden werden, dass dieser Verfahrensschritt zusätzlich zu den Fertigungsschritten bei der Fertigung funktionsfähiger geschichteter Membran-Elektroden-Einheiten einer Zelle vorgesehen wird.

Auch soll mit umfasst sein, dass "dieser zusätzliche, die zur Kühlung benetzbaren Oberflächen der Plattenelemente beeinflussende Verfahrensschritt" alternativ zu einem (bisherigen) Fertigungsschritt oder in Modifikation eines (bisherigen) Fertigungsschritt bei der Fertigung des funktionsfähigen geschichteten Aufbaus einer Zelle vorgesehen wird.

Vereinfacht ausgedrückt, wo bisher die Herstellung einer elektrochemischen Zelle die Herstellung der Plattenelemente und deren Schichtung mit den Membranen zur Herstellung des geschichteten Zellenaufbaus vorgesehen hat, wird gemäß der Erfindung während dieser Herstellung ein ergänzender, alternativer oder modifizierter Schritt vorgesehen, welcher die zur Kühlung benetzbaren Oberflächen der Plattenelemente derart beeinflusst, dass der Kontaktwinkel zwischen den Oberflächen und der Kühlflüssigkeit verkleinert wird.

"Modifizierter Verfahrenschritt" im Sinne des zusätzlichen Verfahrensschritts soll heißen, dass dieser zusätzliche Verfahrensschritt in einem abgeänderten Herstellungsschritt bestehen kann, welche Abänderung dann die erfindungsgemäße Oberflächenbeeinflussung mit Verkleinerung des Kontaktwinkels bewirkt. Abänderung meint dabei insbesondere, dass der bisherige, jetzt aber abzuändernde Verfahrensschritt im Wesentlichen beibehalten wird, bei diesem bzw. ausgehend von diesem Änderungen vorgesehen sind, die die erfindungsgemäße Oberflächenbeeinflussung mit Verkleinerung des Kontaktwinkels bewirken.

Beispielsweise kann hierunter verstanden werden, dass ein bisheriger Beschichtungsschritt als solcher weiter durchgeführt wird, allerdings ein Beschichtungsmaterial, wie eine Legierung, verändert bzw. dessen Zusammensetzung durch Austausch und/oder Zugabe einer neuen Materialkomponente bzw. Legierungskomponente verändert wird.

Dieses bewirkt dann erfindungsgemäß, dass die zur Kühlung benetzbaren Oberflächen der Plattenelemente derart beeinflusst werden, dass der Kontaktwinkel zwischen den Oberflächen und der Kühlflüssigkeit verkleinert wird.

Die Erfindung geht hierbei von der gewonnenen Erkenntnis aus, dass die ein Plattenelement der Zelle zur Kühlung spülende Kühlflüssigkeit Gasblasen enthalten kann, welche sich bei der Spülung des Plattenelements zum Zweck der Kühlung - anstelle der Kühlflüssigkeit - an dem Plattenelement anhängen.

Solche Gasblasen können beispielsweise durch - bei Erwärmung der Kühlflüssigkeit - Ausgasung entstehende Gas- bzw. Luftblasen oder bisher nicht ausgeblasenes Gas sein. Auch können Ursachen für solche Gasblasen verbleibende Gasreste bei einem Füllvorgang von Kühlflüssigkeit oder Leckagen im Kühlsystem sein. Weiterhin können solche Gasblasen auch entstehen durch Ausgasen gelöster Bestandteile bei Erwärmung, durch Verdampfung von Kühlflüssigkeit und/oder speziell bei der Elektrolyse durch Zersetzung von Wasser.

Vereinfacht ausgedrückt, Kühlflüssigkeit und Gasblasen konkurrieren um die Haftung auf der Oberfläche des Plattenelements, wobei die Gasblasen lokal an der Plattenelementoberfläche haften.

Dieses kann an diesen Stellen zu lokalen Unterbrechungen eines Wärmeabtransportes von dem Plattenelement in die Kühlflüssigkeit führen. Dort kann es so in Folge dessen zu lokalen Überhitzungen und Folgeschäden, beispielsweise Membranschädigungen, in einem Inneren der Zelle bzw. dem Inneren eines Zellenaufbaus kommen.

Die Erfindung beruht weiter auf der Überlegung, dass bei einer Steigerung einer Benetzbarkeit der Oberfläche des Plattenelements es der Kühlflüssigkeit erleichtert wird, die Gasblasen von der Oberfläche abzulösen und abzutransportieren.

D.h. die Gasblasen werden abgelöst bzw. haften nicht mehr an der Plattenelementoberfläche, bleiben so in einem Schwebezustand in der Kühlflüssigkeit und können durch (Kühl-)Strömung und/oder Konvektion aus der Zelle abgeleitet werden.

Es hat sich dabei überraschend gezeigt, dass gerade bei einem Kontaktwinkel zwischen der Plattenelementoberfläche und der jeweiligen Kühlflüssigkeit von kleiner 90° sich eine wesentliche Verringerung des Anhaftens von Gasblasen an der Plattenelementoberfläche einstellt bzw. diese schneller wieder von der Plattenoberfläche abgelöst werden und - diese so schneller aus der Zelle abtransportiert werden können.

Dadurch kann Prozesswärme der elektrochemischen Zelle unterbrechungsfrei bzw. nahezu unterbrechungsfrei von dem Plattenelement in die Kühlflüssigkeit abtransportiert werden. Lokalen Überhitzungen und Folgeschäden - infolge des bisherigen, durch Gasblasenanhaftung bewirkten schlechten Wärmeabtransports - im Inneren der Zelle bzw. im Inneren des Zellenaufbaus können vermieden werden. Eine effiziente und einfach erreichbare Kühlung der Zelle wird durch die Erfindung gewährleistet.

Diese überraschende Erkenntnis nutzt die Erfindung und sieht erfindungsgemäß bei der elektrochemischen Zelle das Zellen-Plattenelement mit einer Plattenelementoberfläche vor, bei der der Kontaktwinkel zwischen der Oberfläche und der die Oberfläche benetzenden Kühlflüssigkeit kleiner als 90° ist.

Diese überraschende Erkenntnis nutzt die Erfindung auch und sieht auch erfindungsgemäß bei dem Herstellverfahren die Durchführung des zusätzlichen bzw. weiteren, alternativen oder modifizierten, die zur Kühlung benetzbaren Oberflächen der Plattenelemente beeinflussenden Verfahrensschritt vor, durch welchen ein Kontaktwinkel zwischen der Oberfläche und der Kühlflüssigkeit verkleinert wird.

Die Erfindung erhöht also die Benetzbarkeit der Plattenelementoberfläche durch Durchführung des zusätzlichen Verfahrensschritts, beispielsweise durch eine mechanische Oberflächenbehandlung eine elektrische Oberflächenbehandlung, wie ein Ionenätzen, oder auch chemische Oberflächenbehandlung, welche eine Aufrauung der Plattenelementoberfläche - verbunden mit der erhöhten Benetzbarkeit - bewirken.

Insbesondere kann diese Oberflächenbehandlung auch ein Aufbringen einer hydrophilen Oberflächenschicht, wie ein Aufbringen einer Legierungsbeschichtung mit einer, eine oxidisch durchsetzte Schicht bildenden Legierung oder ein Aufbringen einer die Plattenelementoberfläche mit polaren Gruppen ausstattenden Schicht sein.

Dabei stellt die Erfindung durch diesen die Benetzbarkeit erhöhenden Schritt eine Plattenelementoberfläche zur Verfügung, bei der der Kontaktwinkel zwischen der Oberfläche und einer die Oberfläche benetzenden Kühlflüssigkeit kleiner als 90° ist.

Bevorzugte Weiterbildungen der Erfindung ergeben sich aus den abhängigen Ansprüchen. Die Weiterbildungen beziehen sich sowohl auf die erfindungsgemäße elektrochemische Zelle als auch auf das erfindungsgemäße Verfahren zur Herstellung einer chemischen Zelle.

So ist nach einer bevorzugten Weiterbildung vorgesehen, dass die Kühlflüssigkeit Wasser, insbesondere mit vorbestimmter Reinheit, beispielsweise Deionat, ist.

Das Plattenelement, wie eine Bipolarplatte, kann ein oberflächenbehandeltes, insbesondere umgeformtes, im Speziellen tiefgezogenes Blech sein. Vorzugsweise ist das Plattenelement als zwei gegeneinander angeordnete oberflächenbehandelte, insbesondere tiefgezogene, Bleche ausgebildet (Doppelblech). Alternativ kann die Bipolarplatte auch ein massives oberflächenbehandeltes, umgeformtes Blech sein.

Die Umformung des Bleches kann dabei ein Tiefziehen und/oder ein Prägen, insbesondere von Prägen einer Struktur, wie einer Noppenstruktur oder einer Kanalstruktur, sein.

Dabei können die Doppelbleche derart umgeformt sein, dass sich - bei deren Anordnung gegeneinander - zwischen den Blechen von der Kühlflüssigkeit durchströmte Kühlkanäle ausbilden, wohingegen an deren nach außen gerichteten Oberflächen Kanäle für Betriebsgase der Zelle ausgebildet sind.

Nach einer bevorzugten Weiterbildung ist vorgesehen, dass der Kontaktwinkel deutlich kleiner als 90 ° ist. So kann er kleiner als 80° sein. Insbesondere kann der Kontaktwinkel kleiner als 70° oder kleiner als 60° sein.

Gerade bei erhöhter Wärmeproduktion in der Zelle erhöht sich die Ausgasung aus der Kühlflüssigkeit, so dass gemäß von Weiterbildungen der Erfindung hier kleinere Kontaktwinkel vorgesehen sind. Je mehr Gasblasen so in der Kühlflüssigkeit vorhanden sind, können diese hier mangels Haftung bzw. guter Ablösung schnell abtransportiert werden. Insbesondere bei sehr gashaltiger Kühlflüssigkeit kann vorgesehen sein, den Kontaktwinkel auf kleiner 80° einzustellen. Weiter hat sich auch gezeigt, dass insbesondere bei Kontaktwinkeln kleiner 70° ein weit verbesserter Wärmeabtransport bewirkt werden kann. Ein Anhaften von Gasblasen an die Plattenelementoberfläche wird nahezu ausgeschlossen, wenn die Plattenelementoberfläche den Kontaktwinkel kleiner als 60° realisiert.

Bei einer weiteren bevorzugten Weiterbildung weist das Plattenelement ein Blech mit mindestens einer, beispielsweise im Bereich von 0,05 - 2,0 µm liegenden, Edelmetallschicht, insbesondere mit mindestens einer Goldschicht, oder mehreren übereinander angebrachten, dünnen, beispielsweise jeweils im Bereich von 0,05 - 2,0 µm liegenden, Edelmetallschichten bzw. Goldschichten auf.

Diese Edelmetallschicht bzw. Edelmetallschichten können insbesondere durch ein Sputtern auf das Blech aufgebracht werden.

Dabei stellt insbesondere eine solche Goldbeschichtung - aufgebracht auf dem Blech, beispielsweise ein dünnes Blech mit einer Blechdicke im Bereich von 0,1 mm bis zu mehreren Zentimetern, insbesondere mit einer Blechdicke von ca. 0,15 mm, - eine hinreichende elektrische Leitfähigkeit her. Die Blechdicke kann dabei abhängig sein von einem Material des Blechs, von mechanischen Lasten auf das Blech und/oder von einem Blechdesign.

Die erfindungsgemäße, weiterbildende Oberflächenbehandlung ist bevorzugt eine mechanische oder elektrische oder chemische Oberflächenbearbeitung, insbesondere ein Ionenätzen ("Rücksputtern"), ein Profilieren, ein Sandstrahlen, ein Schmirgeln, ein Satinieren, ein Bürsten und/oder ein Strukturprägen.

Gerade durch derartige, im Allgemeinen bekannte und erprobte Verfahren, wird erreicht, dass - durch dabei bewirktes Oberflächenaufrauen bzw. bewirkte Oberflächenvergröberung - der erfindungsgemäß vorgesehenen Kontaktwinkel bzw. dass die erfindungsgemäße Kontaktwinkelverkleinerung realisiert wird.

Anders ausgedrückt, der zusätzliche Verfahrensschritt kann eine mechanische oder chemische oder elektrische Oberflächenbearbeitung, insbesondere ein Oberflächenaufrauen, ein Ionenätzen ("Rücksputtern"), ein Profilieren, ein Sandstrahlen, ein Schmirgeln, ein Satinieren, ein Bürsten und/oder ein Strukturprägen, sein.

Dabei kann die, insbesondere mechanische, Oberflächenbehandlung zu verschiedenen Zeitpunkte während des Herstellungsprozesses durchgeführt werden. So kann vorgesehen sein, dass die mechanische Oberflächenbehandlung während der Herstellung der Plattenelemente, insbesondere bei einer Blechherstellung von die Plattenelemente ausbildenden Blechen, nach der Blechherstellung und vor einem Umformen der Bleche, bei dem Umformen der Bleche, nach dem Umformen der Bleche und vor einem Beschichten der Bleche oder nach dem Beschichten der Bleche, oder die Oberflächenbehandlung nach der Herstellung der Plattenelemente und vor dem Schichten der Plattenelemente durchgeführt wird.

Weiter kann auch bevorzugt vorgesehen sein, dass das Plattenelement eine Legierungsbeschichtung mit einer Legierung aufweist, welche Legierung zusätzlich zu einer Edelmetall-Legierungskomponente ("edle Komponente"), insbesondere Gold, mindestens eine unedle, eine oxidisch durchsetzte Schicht bildende Metall-Legierungskomponente ("unedle Komponente"), insbesondere Aluminium oder Titan, aufweist.

Dabei soll hier das Aufbringen der Legierungsbeschichtung der zusätzliche erfindungsgemäße Verfahrensschritt ist.

Die edle Komponente der Legierung gewährleistet - nach Auftrag der Legierung auf das Plattenelement - einen guten elektrischen Kontakt, während die unedle Komponente der Legierung nach Auftrag und Abreaktion mit Luftsauerstoff einen oxidischen, polaren und damit hydrophilen Anteil bzw. Oberfläche bildet, der bzw. die den erfindungsgemäßen Einfluss auf die Benetzbarkeit der Plattenelementoberfläche ausübt.

Gerade die ausgebildete Hydrophilie der unedlen Komponente bewirkt die vorrangige Flüssigkeitsbenetzung vor Gasblasenanhaftung an der Plattenelementoberfläche und führt zur verbesserten Wärmeabfuhr.

Weiter kann hier bevorzugt vorgesehen sein, dass ein Massenanteilsverhältnis von der Edelmetall-Legierungskomponente und der mindestens einen unedlen, eine oxidisch durchsetzte Schicht bildenden Metall-Legierungskomponente der Legierung ungefähr in einem Bereich von 90:10 bis 99:1 liegt. Hierdurch wird eine hinreichende elektrische Leitfähigkeit, bei ausreichender Benetzbarkeit erreicht.

Bei einer weiteren Weiterbildung ist vorgesehen, dass das Plattenelement ein, insbesondere tiefgezogenes Blech ist, auf dem die Legierungsbeschichtung - als im Sinne der Erfindung zu verstehenden zusätzlichen Verfahrensschritt - unmittelbar aufgebracht ist bzw. wird.

Unmittelbar kann dabei so verstanden werden, dass keine weitere Schicht - außer dieser Legierungsschicht - bei dem Blech des Plattenelements vorgesehen ist.

Alternativ kann auch vorgesehen sein, dass das Plattenelement bzw. das Blech mindestens eine Edelmetallschicht, insbesondere ein Goldschicht, aufweist, auf der die Legierungsbeschichtung in dem zusätzlichen erfindungsgemäßen Verfahrensschritt aufgebracht ist bzw. wird.

Anders ausgedrückt, gemäß diesen Weiterbildungen ist vorgesehen, dass die Legierungsschicht entweder anstelle einer ursprünglich vorgesehenen Edelmetallschicht, beispielsweise einer Goldschicht, vorgesehen wird - kurz, die Legierungsschicht ersetzt die ursprüngliche Goldbeschichtung - oder, dass die Legierungsschicht zusätzlich auf die ursprüngliche Edelmetallschicht aufgebracht wird.

Durch Auftrag der Legierungsbeschichtung - mit edler Komponente - auf der Edelmetallschicht wird eine gute Haftung der Legierungsschicht erreicht.

Auch kann hier - im Fall der beibehaltenen Edelmetallschicht - weiter vorgesehen sein, dass das Plattenelement eine mehrfache solche Edelmetallbeschichtung, insbesondere eine drei- oder vierfache Goldbeschichtung, aufweist, über der dann die Legierungsbeschichtung aufgebracht ist bzw. wird.

Bei einer weiteren bevorzugten Weiterbildung ist vorgesehen, dass das Plattenelement mindestens eine Edelmetallschicht, insbesondere ein Goldschicht, aufweist, auf der eine hydrophile Beschichtung aufgebracht ist bzw. - im Sinne des zusätzlichen erfindungsgemäßen Verfahrensschritt - wird.

Diese hydrophile Beschichtung kann eine oxidisch durchsetzte Schicht bildende Metallschicht, insbesondere eine Aluminium- oder Titanschicht, sein.

Die hydrophile Beschichtung bewirkt die vorrangige Flüssigkeitsbenetzung vor Gasblasenanhaftung an der Plattenelementoberfläche und führt zur verbesserten Wärmeabfuhr.

Auch kann bevorzugt vorgesehen sein, dass das Plattenelement eine Oberflächenfunktionsbeschichtung mit zumindest einem hydrophilen Anteil aufweist - oder mit einer solchen - im Sine des zusätzlichen erfindungsgemäßen Verfahrensschritt - versehen wird, welche Oberflächenfunktionsbeschichtung die Oberfläche des Plattenelements mit polaren Gruppen, insbesondere OH-Gruppen oder CO-Gruppen oder SiO-Gruppen, zu einer Interaktion mit einer Kühlflüssigkeit ausstattet.

Anders ausgedrückt, das Aufbringen der Oberflächenfunktionsbeschichtung stellt hier weiterbildend den zusätzlichen erfindungsgemäßen Verfahrensschritt dar.

Bei einer weiteren Weiterbildung ist vorgesehen, dass das Plattenelement ein, insbesondere tiefgezogenes Blech ist, auf dem diese Oberflächenfunktionsbeschichtung - als im Sinne der Erfindung zu verstehenden zusätzlichen Verfahrensschritt - unmittelbar aufgebracht ist bzw. wird.

Alternativ kann auch vorgesehen sein, dass das Plattenelement mindestens eine Edelmetallschicht, insbesondere ein Goldschicht, aufweist, auf der die Oberflächenfunktionsbeschichtung in dem zusätzlichen erfindungsgemäßen Verfahrensschritt aufgebracht ist bzw. wird.

Anders ausgedrückt, gemäß diesen Weiterbildungen ist entweder vorgesehen, dass die Oberflächenfunktionsbeschichtung anstelle einer ursprünglich vorgesehenen Edelmetallschicht, beispielsweise einer Goldschicht, vorgesehen wird - kurz, die Oberflächenfunktionsbeschichtung ersetzt die ursprüngliche Goldbeschichtung - oder, dass die Oberflächenfunktionsbeschichtung zusätzlich auf die ursprüngliche Edelmetallschicht aufgebracht wird.

Hier kann weiter vorgesehen sein, dass die Oberflächenfunktionsbeschichtung Moleküle mit einer Ankergruppe auf Phosphonsäure- oder Sulfonsäure- oder auf Thiolbasis aufweist.

Insbesondere kann hier auch vorgesehen sein, dass die Oberflächenfunktionsbeschichtung dünner als 10nm, insbesondere dünner als 8nm oder 6nm, ist.

Bei einer weiteren bevorzugten Weiterbildung ist vorgesehen, dass die Oberflächenfunktionsbeschichtung derart aufgebracht wird, dass ein Lösungsmittel mit Molekülen der Oberflächenfunktionsbeschichtung, beispielsweise mit 0,1 - 2 Gewichtsprozentanteil des Beschichtungsmoleküls an dem Lösungsmittel, hergestellt wird.

In dieses Lösungsmittel wird das mit der Oberflächenfunktionsbeschichtung zu beschichtende Plattenelement bzw. werden die zu beschichtenden Plattenelemente für eine vorgebbare Zeit, beispielsweise ein Moment eines kurzen Eintauchens, wenige Minuten bis zu mehreren Stunden, eingetaucht.

Dann wird das Plattenelement bzw. werden die Plattenelemente aus dem Lösungsmittel entnommen und, insbesondere mit Wasser, gespült.

Auch kann besonderes bevorzugt vorgesehen sein, dass die elektrochemische Zelle eine galvanische Zelle, insbesondere eine PEM-Brennstoffzelle oder eine Elektrolysezelle ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren des unabhängigen Anspruchs kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit dem erfindungsgemäßen Verfahren des unabhängigen Anspruchs kombiniert werden.

Es zeigen:
- FIG 1: einen Ausschnitt aus einer PEM-Brennstoffzelle gemäß einem Ausführungsbeispiel;
- FIG 2: einen Ausschnitt eines Plattenelements einer PEM-Brennstoffzelle mit Edelmetallbeschichtung und Legierungsschicht gemäß einem Ausführungsbeispiel;
- FIG 3: eine Verfahrensablauf von Verfahrensschritten bei der Herstellung einer PEM-Brennstoffzelle gemäß einem Ausführungsbeispiel;
- FIG 4: eine Herstellung einer PEM-Brennstoffzelle mit Lack beschichteten Plattenelementen mit verkleinertem Kontaktwinkel gemäß einem Ausführungsbeispiel;
- FIG 5: einen Ausschnitt eines Plattenelements einer PEM-Brennstoffzelle gemäß einem Ausführungsbeispiel.
FIGen 1 und 5 zeigen jeweils einen Ausschnitt eines Aufbaus 6 einer PEM-Brennstoffzelle 1 (kurz im Folgenden nur Brennstoffzelle oder Zelle).

In dieser Brennstoffzelle 1 reagieren Wasserstoff (H2) und Sauerstoff (02) (Betriebsgase) an einem Elektrolyten unter Abgabe von Wärme zu elektrischer Energie und Produktwasser, das - zusammen mit auskondensiertem Befeuchtungswasser - aus der Brennstoffzelle 1 ausgetragen wird.

Wie die FIGen 1 und 5 zeigen sieht der - geschichtete - Aufbau 6 der Zelle 1 Membrane 11 vor, welche jeweils beiderseits von einer GDL 19 umgeben sind (Membran-Elektroden-Einheiten 20). Dazwischen befinden sich jeweils Elektroden. Auf der Wasserstoffseite heißt die Elektrode Anode; auf der Sauerstoffseite heißt die Elektrode Kathode.

Weiter sieht, wie die FIGen 1 und 5 zeigen, der geschichtete Aufbau 6 der Zelle 1 zwischen den Membran-Elektroden-Einheiten 20 angeordnete Plattenelemente bzw. Bipolarplatten 2 vor. Diese sind dabei jeweils als dünne, beschichtete und geformte (Doppel-)Bleche 12 ausgebildet.

Die bei der Reaktion von Wasserstoff (H2) und Sauerstoff (02) in der Brennstoffzelle 1 entstehende Wärme erfordert eine effiziente Kühlung der Brennstoffzelle 1, um Schädigungen an der Brennstoffzelle 1, insbesondere Schädigungen an einer aktiven Membran 11 der Brennstoffzelle 1, zu verhindern.

Zur Kühlung der Brennstoffzelle 1 wird diese mit Kühlflüssigkeit 5, in diesem Fall Deionat, versorgt bzw. gespült, wodurch die Wärme - über die Kühlflüssigkeit 5 - aus der Brennstoffzelle 1 abgeführt wird.

Dazu - wie auch zur Versorgung der Zelle 1 mit den Betriebsgasen Wasserstoff und Sauerstoff - sieht die Bipolarplatte eine Noppen- bzw. Kanalstruktur vor bzw. ist in den die Bipolarplatte 2 bildenden Blechen 12 eine Noppen- bzw. Kanalstruktur eingeprägt.

Dadurch bilden sich wie die FIGen 1 und 5 zeigen zwischen den eine Bipolarplatte 2 bildenden Blechen 12 Kühlkanäle 17 aus (Kühleinheit 4), wie auch an deren "nach außen gerichteten" Oberflächen Betriebsgaskanäle 16 entstehen. Auf dieser nach "außen gerichteten" Oberfläche sehen die Bleche 12 eine Goldbeschichtung 7 vor.

Über die Kühlmittelkanäle 17 wird die Zelle 1 mit der Kühlflüssigkeit 5 versorgt; über die Betriebsgaskanäle 16 wird die Zelle 1 mit den Betriebsgasen versorgt.

Weiter sind die "inneren Blechoberflächen 3 einer Bipolarplatte 2 bzw. die jeweils einen Kühlkanal 17 begrenzenden Blechoberflächen 3 derart ausgebildet, dass dort ein Kontaktwinkel zwischen der jeweiligen Oberfläche 3 und der Kühlflüssigkeit 5 von ungefähr 60° realisiert ist, wodurch die Brennstoffzelle 1 eine effiziente Kühlung gewährleisten kann.

Dieses beruht auf der Überlegung, dass bei einer Steigerung der Benetzbarkeit der zu Kühlung vorgesehenen Oberflächen 3 der Bipolarplatte 2 bzw. der Bleche 12 - realisiert durch einen auf 60° verkleinerten Kontaktwinkel - es der Kühlflüssigkeit 5 erleichtert wird, an der Oberfläche 3 anhaftende Gasblasen abzulösen und diese aus der Zelle wegzutransportieren.

Die Gasblasen 18 in der Kühlflüssigkeit 5 haften auf Grund des kleinen Kontaktwinkels nicht (mehr) an der Blechoberfläche 3, bleiben so in einem Schwebezustand in der Kühlflüssigkeit 5 und können durch die (Kühlflüssigkeit-)Strömung 5 im Kühlkanal 17 aus der Zelle 5 abgeleitet werden.

Dadurch kann die Prozesswärme der Zelle 1 unterbrechungsfrei bzw. nahezu unterbrechungsfrei von der Bipolarplatte 2 in die Kühlflüssigkeit 5 abgeleitet werden. Eine effiziente und einfach erreichbare Kühlung der Zelle 1 wird gewährleistet.

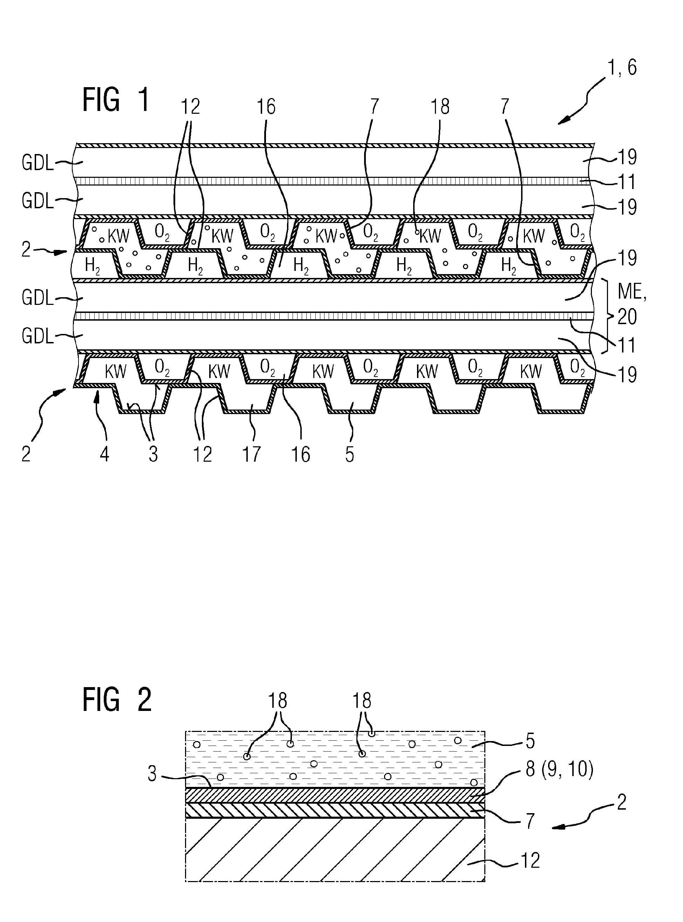

FIG 2 zeigt einen Detailausschnitt einer von der Kühlflüssigkeit 5 benetzten Blechoberfläche 3 eines der Bleche 12 des die Bipolarplatte 2 bildenden Doppelblechs 12, wodurch verdeutlicht wird, wie die Realisierung des hier verkleinerten Kontaktwinkels bzw. des Kontaktwinkels von ca. 60° erreicht wird.

Entsprechende Messmethoden zur Messung eines Kontaktwinkels, beispielsweise eine Plattenmethode nach Neumann, eine Wilhelmy-Platten-Methode oder eine Tropfenmethode, sind bekannt - und können entsprechend - zur Überprüfung - eingesetzt werden.

Wie FIG 2 zeigt ist das dünne Blech 12 hier mit einer dünnen Goldbeschichtung 7 - oder alternativ dazu mit mehreren, z.B. drei oder vier, dünnen Goldschichten 7 - versehen.

Weiter ist das Blech 12 mit einer zusätzlichen, reaktiven Schicht 8 aus einer Mischlegierung versehen. Diese Mischlegierung besitzt eine edle Komponente, in diesem Fall Gold (wie auch die "Grundbeschichtung"), sowie eine unedle Komponente, hier Aluminium.

Die edle Komponente gewährleistet einen guten elektrischen Kontakt sowie stellt sie eine ausreichende Haftung der Legierungsschicht 8 mit der Goldbeschichtung 7 sicher.

Die unedle Komponente bildet nach Abreaktion mit Luftsauerstoff einen oxidischen, polaren und damit hydrophilen Anteil, der den Einfluss auf das Benetzungsverhalten (Kontaktwinkelverkleinerung) ausübt.

Das Massenanteilsverhältnis der edlen Komponente zu der unedlen, die oxidische Passivschicht bildenden Komponente der Legierung wird hier mit 95:5 gewählt. Die Legierungsschicht wird in einer Dicke von 0,1 µm durch Sputtern aufgetragen, wobei ein Gold/Aluminium (AU/AL)-Legierungstarget verwendet wird.

Anstelle der Legierungsbeschichtung bzw. der Legierungsschicht 8 auf der Goldschicht 7 kann in Alternative dazu auch eine unmittelbare Legierungsbeschichtung 8 mit dieser Legierung unmittelbar auf dem dünnen Blech 12 vorgesehen sein (nicht dargestellt). Auch hier kann diese unmittelbare bzw. alleinige Legierungsschicht 8 durch Sputtern aufgetragen werden.

In weiterer Alternative kann auch die unedle Komponente - alleine - als dünne Schicht 10 auf die Goldschicht 7 aufgebracht werden. Auch hier kann dazu ein Sputterverfahren verwendet werden. Auch diese Schicht kann nach Abreaktion mit Luftsauerstoff einen oxidischen, polaren und damit hydrophilen Anteil bilden, der den Einfluss auf das Benetzungsverhalten (Kontaktwinkelverkleinerung) ausübt.

Die Kontaktwinkelverkleinerung - und dadurch erhöhte Benetzbarkeit der Blechoberfläche 3 mit der Kühlflüssigkeit 5 - kann auch durch mechanische Bearbeitung der Bleche 12 bzw. mechanische Oberflächenbearbeitung erreicht werden.

Durch diese mechanische Oberflächenbearbeitung 100 wird eine Vergröberung bzw. eine gesteigerte Aufrauung der Blechoberfläche 3 erreicht, was die erhöhte Benetzbarkeit der Oberfläche 3 bewirkt.

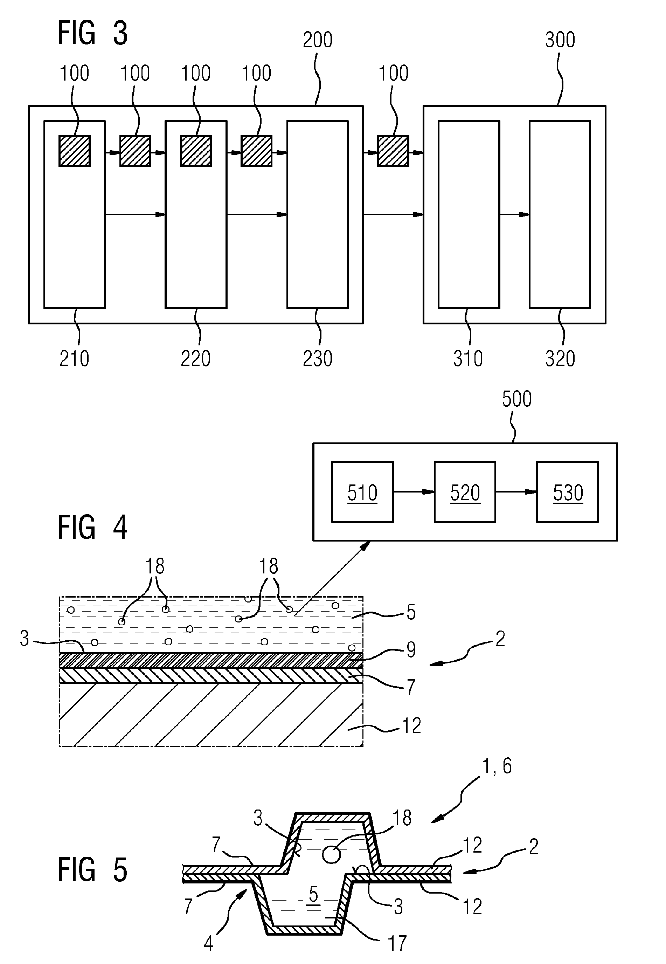

FIG 3 verdeutlicht - an einem bisher üblichen Verfahrensablauf zur Herstellung einer Brennstoffzelle 1 - eine solche - zu verschiedenen Zeitpunkten während des bisher üblichen Verfahrensablaufs vorsehbare - zusätzliche mechanische Oberflächenbearbeitung 100, anschauungsweise ein Schmirgeln oder Satinieren, welche die Benetzbarkeit der Oberfläche 3 erhöht bzw. den Kontaktwinkel der Oberfläche 3 verkleinert.

Wie FIG 3 zeigt erfolgt bei der Herstellung der Brennstoffzelle 1 - nach bisheriger Vorgehensweise - zunächst die Herstellung der Bleche 200. Dazu werden "Rohbleche" hergestellt und diese entsprechend geschnitten 210.

Weiter erfolgt ein Umformen 220 der Bleche 12, wobei durch einen Prägevorgang Strukturen, wie Noppen, in die Bleche 12 eingebracht werden 220.

Anschließend werden die Bleche 12 mit der Goldbeschichtung 7 überzogen.

Danach werden die Bleche 12 geschichtet 300, wobei jeweils zwei Bleche 12 zu einem Doppelblech, d.h. zu der Bipolarplatte 2, geschichtet werden.

Bei Fixierung der die Bipolarplatte 2 bildenden Bleche 12 werden zwischen den gegenüberliegenden, "inneren" Oberflächen3 dieser Bleche 12 Kühlkanäle 17 ausgebildet, deren Oberflächen 3 in Kontakt mit der die Kühlkanäle 17 durchströmenden Kühlflüssigkeit steht 320 (Kühleinheit 4).

In weiterer Schichtung werden zwischen den Bipolarplatten 2 die Membran-Elektroden-Einheiten 20 angeordnet, wobei der geschichtete Aufbau 6 der Zelle 1 komplettiert wird 300.

Wie weiter FIG 3 zeigt kann die mechanische Oberflächenbehandlung 100 bzw. das Schmirgeln bzw. das Satinieren als zusätzlicher Verfahrensschritt 100 - zu verschiedenen Zeitpunkten - bei der Herstellung der Brennstoffzelle 1 vorgesehen werden.

Wie FIG 3 zeigt, kann die mechanische Oberflächenbehandlung 100 bzw. das Schmirgeln oder Satinieren schon bei der Rohblechherstellung 210 durchgeführt werden.

FIG 3 verdeutlicht auch, dass ist es möglich ist, dass das Schmirgeln bzw. Satinieren 100 auch
- nach der Rohblechherstellung 210 und vor einem Umformen 220 der Bleche 12 oder
- bei dem Umformen 220 der Bleche 12 oder
- nach dem Umformen 220 der Bleche 12 und vor einem Beschichten 230 der Bleche 12 oder
- nach dem Beschichten 230 der Bleche 12 und vor dem Schichten 310
durchgeführt wird.

Durch diese mechanische Oberflächenbearbeitung 100 wird die Vergröberung bzw. die erhöhte Aufrauung der Oberfläche 3 erreicht, was die erhöhte Benetzbarkeit der Oberfläche 3 - und damit die verbesserte Wärmeabfuhr bewirkt.

FIG 4 verdeutlicht eine weitere Herstellung der Brennstoffzelle mit verkleinertem Kontaktwinkel bzw. Kontaktwinkel von ca. 60°.

Nach FIG 4 ist vorgesehen, die Oberfläche der Gold beschichteten Bleche 12 mit einer wenigen nm dünnen Funktionsschicht 9, einem Lack 9, welcher hinreichende elektrische Leitfähigkeit aufweist und die Oberfläche 3 der Bleche 12 mit polaren Gruppen ausstattet, zu versehen.

Dieser Lack 9 weist dazu Moleküle mit einer Ankergruppe auf Phosphon- oder Sulfonsäurebasis - oder auch auf Thiolbasis auf. Polare Gruppen, die in diesem Fall von der Goldoberfläche weg gewandt sind, können beispielsweise durch OH-Gruppen, CO-Gruppen oder SiO—Gruppen realisiert sein. Damit wird die Oberfläche 3 der Bleche 12 hydrophiler, die Benetzungsfähigkeit und die Wärmeabfuhr erhöht.

Die Aufbringung 500 der Lackschicht 9 erfolgt wie FIG 4 auch zeigt dadurch, dass ein Lösungsmittel mit den Molekülen, beispielsweise mit 0,1 - 2 Gewichtsprozentanteil der Moleküle an dem Lösungsmittel, hergestellt wird 510.

Die zu beschichtende Goldoberfläche wird in die wässrige Lösung getaucht und für ca. 1 Stunde, gegebenenfalls unter erhöhter Temperatur, darin belassen 520.

Anschließend wird das Substrat entnommen und mit Wasser gespült 530.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrochemische Zelle (1) mit mindestens einem mit einer Kühlflüssigkeit (5) kühlbaren Plattenelement (2) mit einer Oberfläche (3) des Plattenelements (2), welche zum Zweck der Kühlung mit dieser Kühlflüssigkeit (5) benetzbar ist, **dadurch gekennzeichnet, dass** die Oberfläche (3) des Plattenelements (2) derart ausgebildet ist, dass ein Kontaktwinkel zwischen der Oberfläche (3) und dieser die Oberfläche (3) benetzenden Kühlflüssigkeit (5) kleiner als 90° ist.

2. Elektrochemische Zelle (1) nach mindestens einem der vorangehenden Ansprüche,
**dadurch gekennzeichnet, dass** der Kontaktwinkel kleiner als 80°, insbesondere kleiner als 70° oder kleiner als 60° ist und/oder die Kühlflüssigkeit (5) Wasser, insbesondere Deionat, ist.

3. Elektrochemische Zelle (1) nach mindestens einem der vorangehenden Ansprüche,
**dadurch gekennzeichnet, dass** das Plattenelement (2) eine Legierungsbeschichtung (8) mit einer Legierung aufweist, welche Legierung zusätzlich zu einer Edelmetall-Legierungskomponente, insbesondere Gold, mindestens eine unedle, eine oxidisch durchsetzte Schicht bildende Metall-Legierungskomponente, insbesondere Aluminium oder Titan, aufweist.

4. Elektrochemische Zelle (1) nach mindestens einem der vorangehenden Ansprüche,
**dadurch gekennzeichnet, dass** das Plattenelement (2) mindestens eine Edelmetallschicht (7), insbesondere eine Goldschicht, aufweist, auf der eine hydrophile Beschichtung (10) aufgebracht ist.

5. Elektrochemische Zelle (1) nach mindestens dem vorangehenden Anspruch,
**dadurch gekennzeichnet, dass** die hydrophile Beschichtung (10) eine oxidisch durchsetzte Schicht bildende Metallschicht, insbesondere eine Aluminium- oder Titanschicht, ist.

6. Elektrochemische Zelle (1) nach mindestens einem der vorangehenden Ansprüche,
**dadurch gekennzeichnet, dass** das Plattenelement (2) eine Oberflächenfunktionsbeschichtung (9) mit zumindest einem hydrophilen Anteil aufweist, welcher die Oberfläche (3) des Plattenelements (2) mit polaren Gruppen, insbesondere OH-Gruppen oder CO-Gruppen oder SiO-Gruppen, zu einer Interaktion mit einer Kühlflüssigkeit (5) ausstattet.

7. Elektrochemische Zelle (1) nach mindestens dem vorangehenden Anspruch,
**dadurch gekennzeichnet, dass** die Oberflächenfunktionsbeschichtung (9) Moleküle mit einer Ankergruppe auf Phosphonsäure- oder Sulfonsäure- oder auf Thiolbasis aufweist.

8. Elektrochemische Zelle (4) nach mindestens einem der voranstehenden Ansprüche,
**gekennzeichnet dadurch, dass** die elektrochemische Zelle (1) eine galvanische Zelle, insbesondere eine PEM-Brennstoffzelle oder eine Elektrolysezelle ist.

9. Verfahren zur Herstellung einer elektrochemischen Zelle (1) mit mehreren durch eine Kühlflüssigkeit (5) kühlbaren Plattenelementen (2), welche jeweils eine Oberfläche (3) aufweisen, die zur Kühlung des jeweiligen Plattenelements (2) mit der Kühlflüssigkeit (5) benetztbar ist, bei dem
- die Plattenelemente (2) hergestellt werden (200),
- durch abwechselnde Schichtung von den Plattenelementen mit Membranen Membran-Elektroden-Einheiten ausgebildet werden (310), und
- dadurch ein geschichteter Aufbau der elektrochemischen Zelle hergestellt wird (300),
**dadurch gekennzeichnet, dass** ein zusätzlicher, die zur Kühlung benetzbaren Oberflächen (3) der Plattenelemente (2) beeinflussender Verfahrensschritt (100) durchgeführt wird, durch welchen ein Kontaktwinkel zwischen der Oberfläche (3) und der Kühlflüssigkeit (5) verkleinert wird.

10. Verfahren zur Herstellung einer elektrochemischen Zelle (1) nach mindestens einem der voranstehenden Verfahrensansprüche,
**dadurch gekennzeichnet, dass** der zusätzliche Verfahrensschritt (100) eine mechanische oder elektrische oder chemische Oberflächenbearbeitung, insbesondere ein Ionenätzen ("Rücksputtern"), ein Profilieren, ein Sandstrahlen, ein Schmirgeln, ein Satinieren, ein Bürsten und/oder ein Strukturprägen, ist.

11. Verfahren zur Herstellung einer elektrochemischen Zelle (1) nach mindestens einem der voranstehenden Verfahrensansprüche,
**dadurch gekennzeichnet, dass** der zusätzliche Verfahrensschritt (100) ein Beschichten der Plattenelemente (2) mit einer Legierung (8), welche Legierung (8) zusätzlich zu einer Edelmetall-Legierungskomponente, insbesondere Gold, mindestens eine unedle, eine oxidisch durchsetzte Schicht bildende Metall-Legierungskomponente, insbesondere Aluminium oder Titan, aufweist.

12. Verfahren zur Herstellung einer elektrochemischen Zelle (1) nach mindestens dem voranstehenden Verfahrensanspruch, **dadurch gekennzeichnet, dass** die Legierungsschicht (8) anstelle einer Edelmetallschicht (7) auf die Plattenelemente (2) bildende Bleche (12) aufgebracht wird oder dass die Legierungsschicht (8) auf eine Edelmetallschicht (7) der mit der Edelmetallschicht (7) beschichteten Plattenelemente (2) aufgebracht wird.

13. Verfahren zur Herstellung einer elektrochemischen Zelle (1) nach mindestens einem der voranstehenden Verfahrensansprüche,
**dadurch gekennzeichnet, dass** der zusätzliche Verfahrensschritt (100) ein Beschichten der Plattenelemente (2) mit einer hydrophilen Beschichtung (10), welche hydrophile Beschichtung (10) eine oxidisch durchsetzte Schicht bildende Metallschicht, insbesondere eine Aluminium- oder Titanschicht, ist.

14. Verfahren zur Herstellung einer elektrochemischen Zelle (1) nach mindestens einem der voranstehenden Verfahrensansprüche,
**dadurch gekennzeichnet, dass** der zusätzliche Verfahrensschritt (100) ein Beschichten der Plattenelemente (2) mit einer Oberflächenfunktionsbeschichtung (9) ist, welche Oberflächenfunktionsbeschichtung (9) zumindest einem hydrophilen Anteil aufweist, welcher die Oberfläche des Plattenelements mit polaren Gruppen, insbesondere OH-Gruppen oder CO-Gruppen oder SiO-Gruppen, zu einer Interaktion mit einer Kühlflüssigkeit ausstattet.
